# EUROPEAN PATENT APPLICATION

(11) **EP 4 474 935 A1**
(43) Date of publication of application: **11.12.2024**
(21) Application number: 23749669.0
(22) Date of filing: 26.01.2023
(51) Int. Cl.: G05D 1/02, G05D 1/10, G08G 1/00, G08G 1/0969, G08G 1/123, G01C 21/20, G01C 21/26, G01C 21/34, G06F 16/909

(54) **CONTROL SYSTEM, CONTROL METHOD, AND STORAGE MEDIUM**

(30) Priority: 01.02.2022 JP 2022014166; 25.05.2022 JP 2022085595; 22.12.2022 JP 2022205116
(71) Applicant: CANON KABUSHIKI KAISHA, Tokyo 146-8501 (JP)
(72) Inventor: INO, Koichiro, Tokyo 146-8501 (JP); SATO, Yohei, Tokyo 146-8501 (JP)
(74) Representative: TBK
(86) International application number: PCT/JP2023/002487
(87) International publication number: WO 2023/149353

(57) **Abstract**

A control system capable of generating route information about a movement route of a mobile object in a three-dimensional space defined according to a predetermined coordinate system formats spatial information about a type of physical object capable of existing in or entering a three-dimensional space in association with a unique identifier and generates the route information about the movement route of the mobile object on the basis of the spatial information and type information of the mobile object, thereby generating the route information about the movement route of the mobile object in the three-dimensional space.

## Description

### [Technical Field]

The present invention relates to a control system, a control method, a storage medium, and the like.

### [Background Art]

In recent years, technological innovations of autonomous traveling mobilities, spatial awareness systems, and the like in the world have led to the development of an overall picture (hereinafter referred to as "digital architecture") for connecting data and systems between different organizations and members of society.

For example, in Patent Literature 1, a single processor divides a spatio-temporal region into spatial and temporal regions in accordance with spatio-temporal management data provided by the user to generate a plurality of spatio-temporal division regions.

Also, in consideration of the proximity of time and space of the spatio-temporal division region, an identifier expressed by a one-dimensional integer value is assigned for uniquely identifying each of the plurality of spatio-temporal division regions. Also, a spatio-temporal data management system for deciding an arrangement of time-series data so that data of spatio-temporal division regions whose identifiers are close to each other is arranged in close proximity on a storage device is disclosed.

### [Citation List]

### [Patent Literature]

[Patent Literature 1]
Japanese Patent Laid-Open No. 2014-002519

### [Summary of Invention]

### [Technical Problem]

However, in the above Patent Literature 1, only a processor, which has generated a region, can ascertain data related to the generated region using an identifier. Therefore, users of different systems cannot utilize information of their spatio-temporal division regions.

Therefore, an objective of the present invention is to provide a control system capable of generating route information about a movement route of a mobile object in a three-dimensional space.

### [Solution to Problem]

According to an aspect of the present invention, there is provided a control system including:
a formatting means configured to format spatial information about a type of physical object capable of existing in or entering a three-dimensional space in association with a unique identifier; and
a control means configured to generate route information about a movement route of a mobile object on the basis of the spatial information acquired from the formatting means and type information of the mobile object.

### [Advantageous Effects of Invention]

According to the present invention, it is possible to provide a control system capable of generating route information about a movement route of a mobile object in a three-dimensional space.

### [Brief Description of Drawings]

FIG. 1 is a diagram showing an example of an overall configuration of an autonomous mobile object control system according to an embodiment of the present invention.
FIG. 2(A) is a diagram showing an example of an input screen when a user inputs position information.
FIG. 2(B) is a diagram showing an example of a selection screen for selecting an autonomous mobile object to be used.
FIG. 3(A) is a diagram showing an example of a screen for confirming a current position of an autonomous mobile object.
FIG. 3(B) is a diagram showing an example of a map display screen for confirming the current position of the autonomous mobile object.
FIG. 4 is a block diagram showing an example of an internal configuration of each device in FIG. 1.
FIG. 5(A) is a diagram showing a spatial positional relationship of an autonomous mobile object 12 and a pillar 99 existing as information of a geographical object near the autonomous mobile object 12 in the real world.
FIG. 5(B) is a diagram showing a state in which the autonomous mobile object 12 and the pillar 99 are mapped to any XYZ coordinate system space using P0 as the origin.
FIG. 6 is a perspective view showing an example of a mechanical configuration of the autonomous mobile object 12 according to an embodiment.
FIG. 7 is a block diagram showing an example of a specific hardware configuration of a control unit 10-2, a control unit 11-2, a control unit 12-2, a control unit 13-2, a control unit 14-3, and a control unit 15-2.
FIG. 8 is a sequence diagram showing a process executed by the autonomous mobile object control system according to the embodiment.
FIG. 9 is a sequence diagram following FIG. 8.
FIG. 10 is a sequence diagram following FIG. 9.
FIG. 11(A) is a diagram showing the Earth's latitude/longitude information.
FIG. 11(B) is a perspective view showing a predetermined space 100 of FIG. 11(A).
FIG. 12 is a diagram schematically showing spatial information within the space 100.
FIG. 13(A) is a diagram in which route information is displayed in map information.
FIG. 13(B) is a diagram in which route information using position point cloud data is displayed in map information.
FIG. 13(C) is a diagram in which route information using a unique identifier is displayed in map information.
FIG. 14 is a sequence diagram showing a process in which each device stores type information in a format database 14-4.
FIG. 15 is a sequence diagram following FIG. 14.
FIG. 16 is a sequence diagram following FIG. 15.
FIG. 17 is a sequence diagram showing a process of storing type information in a method different from FIG. 14.
FIG. 18 is a perspective view showing an example of a space on a roadway.
FIG. 19 is a view showing a roadway of one lane on each side and its space from above.
FIG. 20 is a perspective view showing an example of a space 702 on a road.
FIG. 21 is a sequence diagram showing an example of a process of determining whether or not movement is possible from type information and a mobility type.
FIG. 22 is a sequence diagram showing a process of acquiring type information.

### [Description of Embodiments]

Hereinafter, embodiments of the present invention will be described with reference to the drawings. However, the present invention is not limited to the following embodiments. Furthermore, the same members or elements are assigned the same reference signs in the drawings and redundant descriptions thereof will be omitted or simplified.

Although an example applied to the control of an autonomous mobile object will be described in the embodiment, a user can manipulate at least one part of a mobile object in relation to movement of the mobile object. That is, for example, a configuration in which various types of display processes related to a movement route and the like may be performed for the user and the user may perform a part of a driving manipulation on the mobile object with reference to displayed content may be adopted.

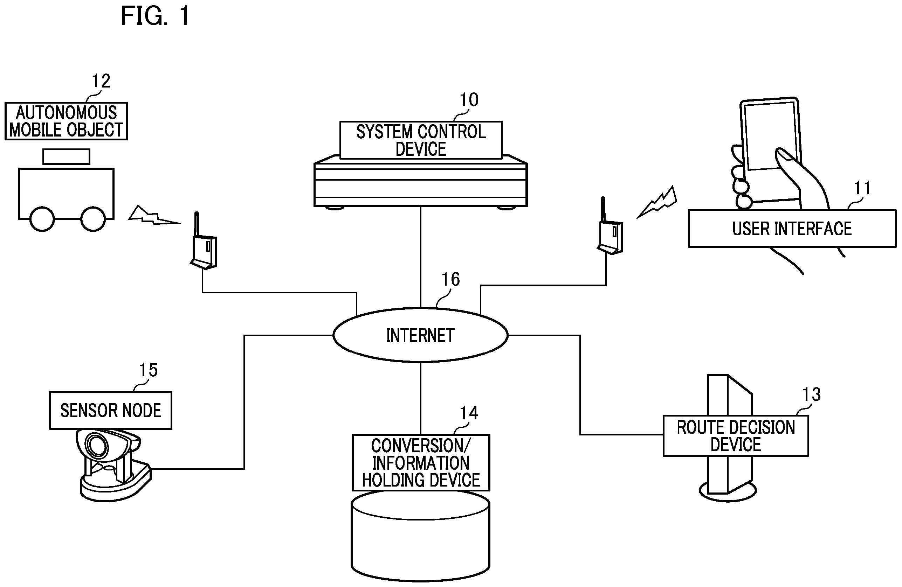

FIG. 1 is a diagram showing an example of an overall configuration of an autonomous mobile object control system according to an embodiment of the present invention. As shown in FIG. 1, the autonomous mobile object control system of the present embodiment (which may be abbreviated as a control system) includes a system control device 10, a user interface 11, an autonomous mobile object 12, a route decision device 13, a conversion/information holding device 14, a sensor node 15, and the like. Here, the user interface 11 is a user terminal device.

Furthermore, in the present embodiment, devices shown in FIG. 1 are connected by network connection units to be described below via the Internet 16. However, for example, another network system such as a local area network (LAN) may be used. Also, some of the system control device 10, the user interface 11, the route decision device 13, the conversion/information holding device 14, and the like may be configured as the same device.

Each of the system control device 10, the user interface 11, the autonomous mobile object 12, the route decision device 13, the conversion/information holding device 14, and the sensor node 15 includes an information processing device consisting of a central processing unit (CPU) serving as a computer, a read-only memory (ROM), a random-access memory (RAM), a hard disk drive (HDD), or the like serving as a storage medium, and the like. Details of functions and internal configurations of the devices will be described below.

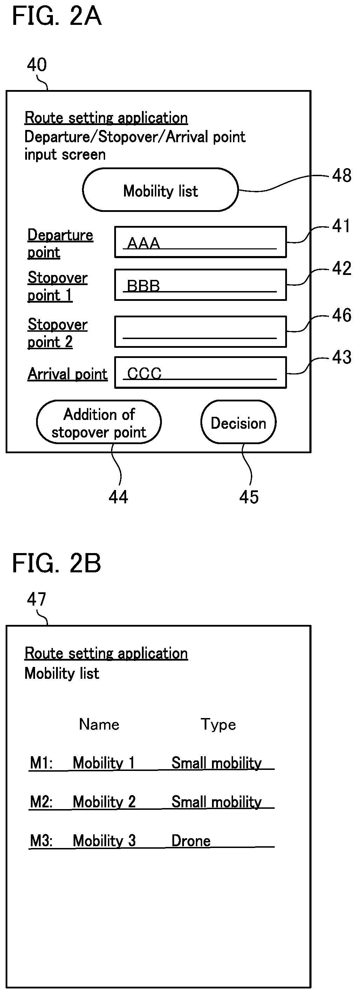

Next, service application software (hereinafter abbreviated as an application) provided by the autonomous mobile object control system will be described. Hereinafter, first, a screen image displayed on the user interface 11 when the user inputs position information will be described with reference to FIGS. 2(A) and 2(B).

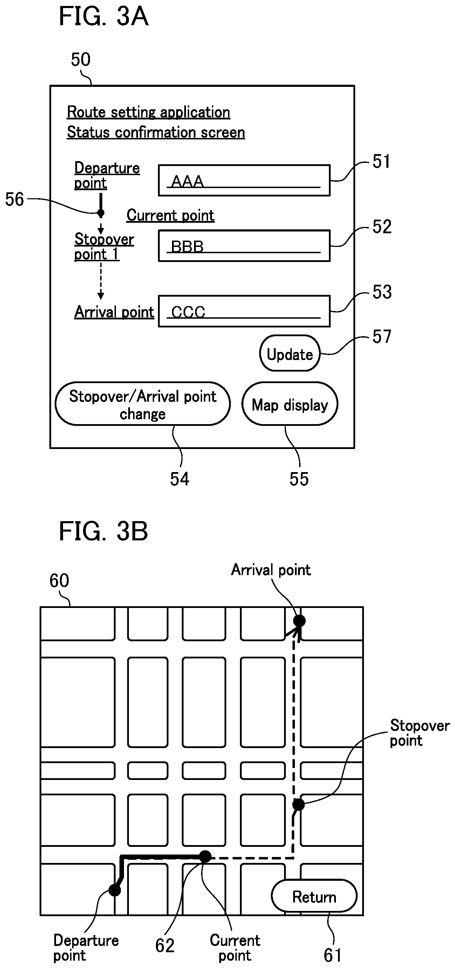

Next, a screen image displayed on the user interface 11 when the user browses a current position of the autonomous mobile object 12 will be described with reference to FIGS. 3(A) and 3(B). According to these descriptions, how the application is manipulated in the autonomous mobile object control system will be described with reference to an example.

Furthermore, in the present description, for convenience, the map display in a two-dimensional plane will be described. However, in the present embodiment, the user can designate a three-dimensional position including a "height" and can input "height" information. That is, according to the present embodiment, a three-dimensional map can be generated.

FIG. 2(A) is a diagram showing an example of an input screen when a user inputs position information and FIG. 2(B) is a diagram showing an example of a selection screen for selecting an autonomous mobile object to be used. When the user manipulates a display screen of the user interface 11 to access the Internet 16 and selects, for example, a route setting application of the autonomous mobile object control system, a webpage of the system control device 10 is displayed.

Content initially displayed on a webpage is a departure/stopover/arrival point input screen 40 for setting a departure point, a stopover point, and an arrival point when the autonomous mobile object 12 is moved. The input screen 40 has a list display button 48 for displaying a list of autonomous mobile objects (mobilities) to be used. When the user presses the list display button 48, a mobility list display screen 47 is displayed as shown in FIG. 2(B).

First, the user selects an autonomous mobile object (mobility) to be used on the list display screen 47. On the list display screen 47, for example, mobilities M1 to M3 are displayed as selectable, but the number of mobilities is not limited thereto.

When the user selects any one of the mobilities M1 to M3 according to a click manipulation or the like, the screen automatically returns to the input screen 40 of FIG. 2(A). Also, the list display button 48 displays a selected mobility name. Thereafter, the user inputs a location to be set as the departure point to an input field 41 for the "departure point."

Also, the user inputs the location to be set as a stopover point to an input field 42 for "stopover point 1." Furthermore, the stopover point can be added, an input field 46 for "stopover point 2" can be additionally displayed when an addition button 44 for a stopover point is pressed once, and the stopover point to be added can be input thereto.

Every time the addition button 44 for the stopover point is pressed, input fields 46 are additionally displayed for "stopover point 3" and "stopover point 4" and a plurality of stopover points to be added can be input thereto. Also, the user inputs a location to be set as the arrival point to an input field 43 for the "arrival point." Although not shown in the drawing, when the input fields 41 to 43, 46, and the like are clicked, a keyboard for inputting characters and the like is temporarily displayed and desired characters can be input.

Also, the user can set the movement route of the autonomous mobile object 12 by pressing a decision button 45. In the example of FIG. 2, "AAA" is set as the departure point, "BBB" is set as stopover point 1, and "CCC" is set as the arrival point. Text input to the input field may be, for example, an address or the like or it may be possible to input position information indicating a specific location, such as latitude/longitude information, a store name, and a telephone number.

FIG. 3(A) is a diagram showing an example of a screen for confirming the current position of the autonomous mobile object and FIG. 3(B) is a diagram showing an example of a map display screen for confirming the current position of the autonomous mobile object. In FIG. 3(A), reference sign 50 denotes a confirmation screen, which is displayed by manipulating a manipulation button (not shown) after the movement route of the autonomous mobile object 12 is set on the screen as shown in FIG. 2(A). In the confirmation screen 50, a current position of the autonomous mobile object 12 is displayed on the webpage of the user interface 11, for example, like a current point 56. Thus, the user can easily ascertain the current position.

Also, the user can update the screen display information and display the latest state by pressing an update button 57. Also, the user can change the departure point, the stopover point, and the arrival point by pressing a stopover/arrival point change button 54. That is, the point can be changed by inputting a desired location to be reset in each of the input field 51 for the "departure point," the input field 52 for "stopover point 1," and the input field 53 for the "arrival point."

FIG. 3(B) shows an example in which the screen is switched from the confirmation screen 50 to a map display screen 60 when the map display button 55 in FIG. 3(A) is pressed. In the map display screen 60, the current point of the autonomous mobile object 12 is confirmed more easily by displaying the position of the current point 62 on the map. Also, when the user presses a return button 61, the display screen can be returned to the confirmation screen 50 of FIG. 3(A).

As described above, the user can easily set a movement route for moving the autonomous mobile object 12 from a predetermined location to another predetermined location by manipulating the user interface 11. Such a route setting application can also be applied to, for example, a taxi dispatch service, a delivery service of a drone, and the like.

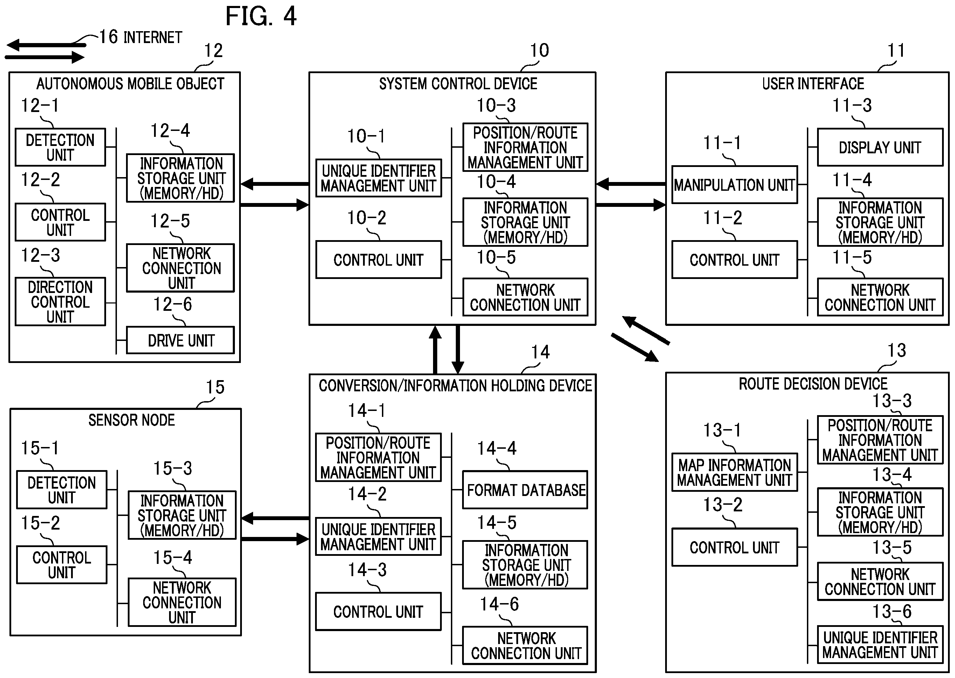

Next, examples of configurations and functions of the devices 10 to 15 in FIG. 1 will be described in detail with reference to FIG. 4. FIG. 4 is a block diagram showing an example of an internal configuration of each device in FIG. 1. In FIG. 4, the user interface 11 includes a manipulation unit 11-1, a control unit 11-2, a display unit 11-3, an information storage unit (memory/HD) 11-4, and a network connection unit 11-5.

The manipulation unit 11-1 includes a touch panel, a key button, and the like, and is used for inputting data. The display unit 11-3 is, for example, a liquid crystal screen or the like, and is used for displaying route information and other data.

The display screen of the user interface 11 shown in FIGS. 2 and 3 is displayed on the display unit 11-3. The user can perform a route selection process, an information input process, an information confirmation process, and the like using a menu displayed on the display unit 11-3. That is, the manipulation unit 11-1 and the display unit 11-3 provide a manipulation interface for the user to actually perform a manipulation. Furthermore, instead of providing the manipulation unit 11-1 and the display unit 11-3 separately, the manipulation unit and the display unit may be used together as a touch panel.

The control unit 11-2 has a built-in CPU as a computer, manages various types of applications in the user interface 11, manages modes such as information input and information confirmation, and controls a communication process. Also, the control unit 11-2 controls a process of each part within the system control device.

The information storage unit (memory/HD) 11-4 is a database for holding necessary information such as a computer program to be executed by the CPU. The network connection unit 11-5 controls communication to be performed via the Internet, a local area network (LAN), a wireless LAN, or the like. Furthermore, the user interface 11, for example, may be a device such as a smartphone or may be configured in the form of a tablet terminal.

Thus, the user interface 11 of the present embodiment can display the departure point, the stopover point, and the arrival point on a browser screen of the system control device 10 as the input screen 40 and can allow the user to input position information such as the departure point, the stopover point, and the arrival point. Furthermore, when the confirmation screen 50 and the map display screen 60 are displayed on the browser screen, the current position of the autonomous mobile object 12 can be displayed.

In FIG. 4, the route decision device 13 includes a map information management unit 13-1, a control unit 13-2, a position/route information management unit 13-3, an information storage unit (memory/HD) 13-4, a network connection unit 13-5, and a unique identifier management unit 13-6. The map information management unit 13-1 has wide-area map information, searches for route information indicating a route on the map on the basis of designated predetermined position information, and transmits the route information of a search result to the position/route information management unit 13-3.

The map information is three-dimensional map information including information such as a geographical feature and latitude/longitude/altitude, and also includes regulatory information related to road traffic laws such as roadways, sidewalks, a travel direction, traffic regulations, and the like. Also, for example, the map information includes time-variant regulatory information such as information of one-way traffic according to a time period and pedestrian roads according to a time period together with time information. The control unit 13-2 has a built-in CPU serving as a computer and controls a process of each part within the route decision device 13.

The position/route information management unit 13-3 manages position information of the autonomous mobile object acquired via the network connection unit 13-5, transmits the position information to the map information management unit 13-1, and manages the route information serving as the search result acquired from the map information management unit 13-1. The control unit 13-2 converts the route information managed by the position/route information management unit 13-3 into a predetermined data format in accordance with a request of an external system and transmits the converted route information to the external system.

As described above, in the present embodiment, the route decision device 13 is configured to search for a route in accordance with road traffic laws or the like on the basis of designated position information and to output the route information in a predetermined data format.

In FIG. 4, the conversion/information holding device 14 includes a position/route information management unit 14-1, a unique identifier management unit 14-2, a control unit 14-3, a format database 14-4, an information storage unit (memory/HD) 14-5, and a network connection unit 14-6. The position/route information management unit 14-1 manages predetermined position information acquired through the network connection unit 14-6 and transmits the position information to the control unit 14-3 in accordance with a request of the control unit 14-3. The control unit 14-3 has a built-in CPU serving as a computer and controls a process of each part within the conversion/information holding device 14.

The control unit 14-3 converts the position information into a unique identifier defined in the format on the basis of the position information acquired from the position/route information management unit 14-1 and the format information managed in the format database 14-4. Also, the unique identifier is transmitted to the unique identifier management unit 14-2.

Although the format will be described in detail below, an identifier (hereinafter referred to as a unique identifier) is allocated to a space starting from a predetermined position, and the space is managed by the unique identifier. In the present embodiment, it is possible to acquire a corresponding unique identifier and information within the space on the basis of predetermined position information.

The unique identifier management unit 14-2 manages the unique identifier obtained in the conversion process of the control unit 14-3 and transmits the unique identifier through the network connection unit 14-6. The format database 14-4 manages the format information and transmits the format information to the control unit 14-3 in accordance with the request of the control unit 14-3.

Also, the information within the space acquired through the network connection unit 14-6 is managed using the format. The conversion/information holding device 14 manages information about the space acquired by the external equipment, device, or network in association with a unique identifier. Also, the unique identifier and the information about the space associated therewith are provided to the external equipment, device, or network.

As described above, the conversion/information holding device 14 acquires the unique identifier and the information within the space on the basis of the predetermined position information, and manages and provides the information in a state in which the information can be shared by the external equipment, device, and network connected to the conversion/information holding device 14. Also, the conversion/information holding device 14 converts the position information designated in the system control device 10 into the unique identifier and provides the unique identifier to the system control device 10.

In FIG. 4, the system control device 10 includes a unique identifier management unit 10-1, a control unit 10-2, a position/route information management unit 10-3, an information storage unit (memory/HD) 10-4, and a network connection unit 10-5. The position/route information management unit 10-3 holds simple map information in which topographic information and latitude/longitude information are associated and manages predetermined position information and route information acquired through the network connection unit 10-5.

Moreover, the position/route information management unit 10-3 can separate the route information at predetermined intervals and generate position information such as latitude/longitude of a separated location. The unique identifier management unit 10-1 manages the position information and information obtained by converting the route information into the unique identifier. The control unit 10-2 has a built-in CPU serving as a computer, controls a communication function for the position information, the route information, and the unique identifier of the system control device 10, and controls a process of each part within the system control device 10.

Also, the control unit 10-2 provides a webpage to the user interface 11 and transmits predetermined position information acquired from the webpage to the route decision device 13. Also, predetermined route information is acquired from the route decision device 13 and each position information item of the route information is transmitted to the conversion/information holding device 14. Also, the route information converted into the unique identifier acquired from the conversion/information holding device 14 is transmitted to the autonomous mobile object 12.

As described above, the system control device 10 is configured to acquire the predetermined position information designated by the user, transmit and receive the position information and the route information, generate the position information, and transmit and receive the route information using the unique identifier.

Also, the system control device 10 collects the route information necessary for the autonomous mobile object 12 to perform autonomous movement on the basis of the position information input to the user interface 11, and provides the route information using the unique identifier to the autonomous mobile object 12. Furthermore, in the present embodiment, the system control device 10, the route decision device 13, and the conversion/information holding device 14, for example, function as a server.

In FIG. 4, the autonomous mobile object 12 includes a detection unit 12-1, a control unit 12-2, a direction control unit 12-3, an information storage unit (memory/HD) 12-4, a network connection unit 12-5, and a drive unit 12-6. The detection unit 12-1, for example, has a plurality of imaging elements and has a function of measuring a distance on the basis of a phase difference between two or more imaging signals obtained from the plurality of imaging elements. Also, a self-position estimation function of acquiring detection information of obstacles such as a nearby geographical feature, a building wall, and the like (hereinafter referred to as detection information) and performing self-position estimation on the basis of the detection information and map information is provided.

Also, the detection unit 12-1 has a self-position detection function such as a Global Positioning System (GPS) and a direction detection function such as, for example, a geomagnetic sensor. Also, the control unit 12-2 can generate a three-dimensional map of cyberspace on the basis of the acquired detection information, self-position estimation information, and direction detection information.

Here, a three-dimensional map of cyberspace is one in which spatial information equivalent to a geographical object position in the real world can be expressed as digital data. In this three-dimensional map of cyberspace, the autonomous mobile object 12 existing in the real world and information of a geographical object near the autonomous mobile object 12 are held as spatially equivalent information as digital data. Therefore, efficient movement is possible by using this digital data.

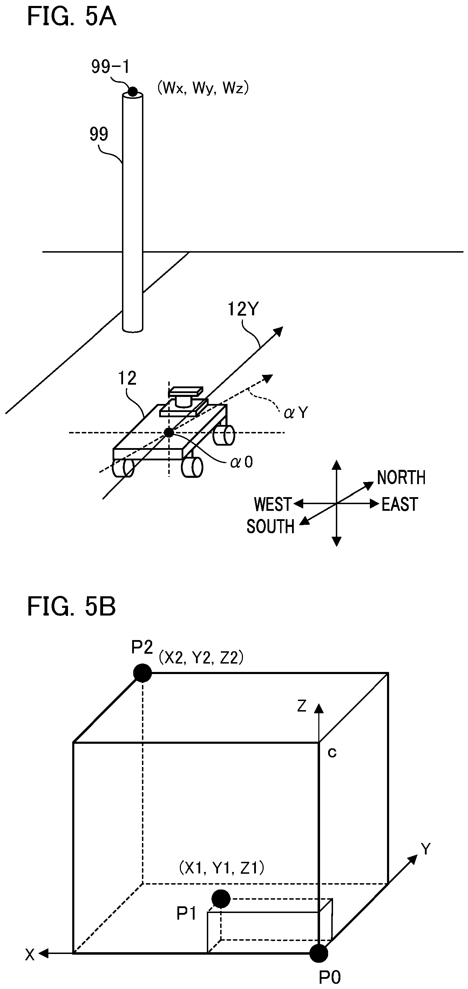

Hereinafter, a three-dimensional map of cyberspace for use in the present embodiment will be described with reference to FIG. 5 as an example. FIG. 5(A) is a diagram showing a spatial positional relationship between the autonomous mobile object 12 and a pillar 99 existing as information of a geographical object near the autonomous mobile object 12 in the real world and FIG. 5(B) is a diagram showing a state in which the autonomous mobile object 12 and the pillar 99 are mapped to any XYZ coordinate system space (a space of a three-dimensional coordinate system) using P0 as the origin.

In FIGS. 5(A) and 5(B), the position of the autonomous mobile object 12 is identified as a position α0 within the autonomous mobile object 12 from the latitude/longitude position information acquired by a GPS (not shown) or the like mounted in the autonomous mobile object 12. Also, a direction of the autonomous mobile object 12 is identified according to a difference between a direction aY acquired by an electronic compass (not shown) or the like and a movement direction 12Y in the autonomous mobile object 12.

Also, the position of the pillar 99 is identified as a position of a vertex 99-1 from position information measured in advance. Moreover, it is possible to acquire a distance from α0 of the autonomous mobile object 12 to the vertex 99-1 according to the distance measurement function of the autonomous mobile object 12. In FIG. 5(A), when α0 is used as the origin using the movement direction 12Y as the axis of the XYZ coordinate system, the position is indicated by coordinates (Wx, Wy, Wz) of the vertex 99-1.

In the three-dimensional map of cyberspace, information acquired in this way is managed as digital data and can be reconstructed by the system control device 10, the route decision device 13, and the like as spatial information as shown in FIG. 5(B). In FIG. 5(B), a state in which the autonomous mobile object 12 and the pillar 99 are mapped to any XYZ coordinate system space using P0 as the origin is shown. By setting P0 to a predetermined latitude and longitude in the real world and taking the north direction in the real world as the Y-axis direction, the autonomous mobile object 12 can be represented as P1 and the pillar 99 can be represented as P2 in any XYZ coordinate system space.

Specifically, the position P1 of α0 in this space can be calculated from the latitude/longitude of α0 and the latitude/longitude of P0. Likewise, the pillar 99 can be calculated as P2. Two objects, i.e., the autonomous mobile object 12 and the pillar 99, are represented in a three-dimensional map of cyberspace in this example. However, of course, even if there are a larger number of objects, they can be handled in a similar way. As described above, a three-dimensional map is obtained by mapping self-positions and physical objects of the real world in a three-dimensional space.

Returning to FIG. 4, the autonomous mobile object 12 can store learning result data of physical object detection performed by machine learning in, for example, the information storage unit (memory/HD) 12-4, and can detect a physical object from the captured image using machine learning. Furthermore, the detection information can also be acquired from an external system via the network connection unit 12-5 and reflected in the three-dimensional map. Furthermore, the control unit 12-2 has a built-in CPU serving as a computer, controls the movement, direction change, and autonomous traveling function of the autonomous mobile object 12, and controls a process of each part within the autonomous mobile object 12.

The direction control unit 12-3 changes a movement direction of the autonomous mobile object 12 by changing a drive direction of the mobile object with the drive unit 12-6. The drive unit 12-6 includes a drive device such as a motor and generates a propulsion force for the autonomous mobile object 12. The autonomous mobile object 12 can reflect the self-position, detection information, and physical object detection information in the three-dimensional map, generate a route for maintaining a certain distance from nearby geographical features, buildings, obstacles, and physical objects, and perform an autonomous traveling process.

Furthermore, the route decision device 13 generates a route mainly in consideration of regulatory information about road traffic laws. On the other hand, the autonomous mobile object 12 more accurately detects positions of nearby obstacles on a route from the route decision device 13 and generates a route for movement without contact therewith on the basis of its size. Also, the information storage unit (memory/HD) 12-4 of the autonomous mobile object 12 can store a mobility type of the autonomous mobile object itself.

This mobility type is, for example, a legally identified type of mobile object, such as a car, a bicycle, or a drone. On the basis of this mobility type, the formatted route information to be described below can be generated.

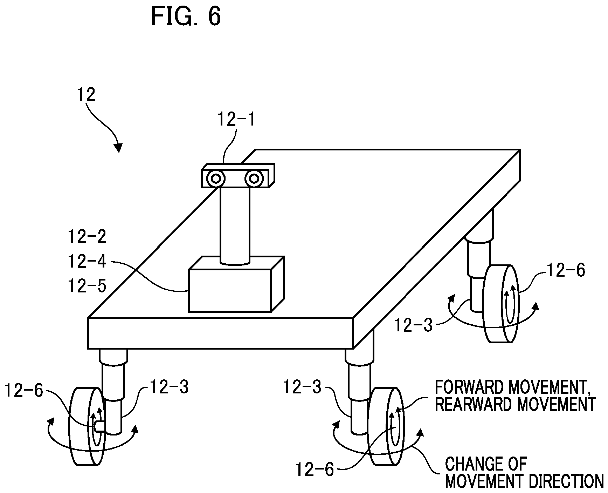

Here, a configuration of a main body of the autonomous mobile object 12 in the present embodiment will be described with reference to FIG. 6. FIG. 6 is a perspective view showing an example of a mechanical configuration of the autonomous mobile object 12 according to the embodiment. Furthermore, an example of an object traveling with wheels is described in the present embodiment, but the autonomous mobile object 12 is not limited thereto and may be a flying object such as a drone.

In FIG. 6, the autonomous mobile object 12 is equipped with a detection unit 12-1, a control unit 12-2, a direction control unit 12-3, an information storage unit (memory/HD) 12-4, a network connection unit 12-5, and a drive unit 12-6, which are electrically connected to each other. At least two or more drive units 12-6 and two or more direction control units 12-3 are arranged in the autonomous mobile object 12.

The direction control unit 12-3 changes a movement direction of the autonomous mobile object 12 by changing the direction of the drive unit 12-6 according to the rotation drive of a shaft and the drive unit 12-6 moves the autonomous mobile object 12 forward and backward by rotating the shaft. Furthermore, the configuration described with reference to FIG. 6 is one example, and the present invention is not limited thereto. For example, the movement direction may be changed using an omni wheel or the like.

Furthermore, the autonomous mobile object 12 is, for example, a mobile object using simultaneous localization and mapping (SLAM) technology. Also, a configuration in which autonomous movement can be performed along a designated predetermined route on the basis of detection information obtained in a detection process of the detection unit 12-1 and detection information of an external system acquired via the Internet 16 is adopted.

The autonomous mobile object 12 can also perform trace movement such as tracing a finely designated point and can also generate route information on its own in the space for movement while passing through a roughly set point. As described above, the autonomous mobile object 12 of the present embodiment can perform the autonomous movement on the basis of the route information using the unique identifier provided by the system control device 10.

Returning to FIG. 4, the sensor node 15 is an external system such as a video surveillance system such as a roadside camera unit, and includes a detection unit 15-1, a control unit 15-2, an information storage unit (memory/HD) 15-3, and a network connection unit 15-4. The detection unit 15-1 acquires detection information of an area that it is capable of detecting, like, for example, a camera, and has a physical object detection function and a distance measurement function.

The control unit 15-2 has a built-in CPU as a computer, controls the detection, data storage, and data transmission functions of the sensor node 15, and controls a process of each part within the sensor node 15. Also, the detection information acquired by the detection unit 15-1 is stored in the information storage unit (memory/HD) 15-3 and transmitted to the conversion/information holding device 14 through the network connection unit 15-4.

As described above, the sensor node 15 is configured so that detection information such as image information, feature point information of a detected physical object, and position information detected by the detection unit 15-1 can be stored in the information storage unit 15-3 and communication is possible. Also, the sensor node 15 provides the detection information of the area capable of being detected by the sensor node 15 to the conversion/information holding device 14.

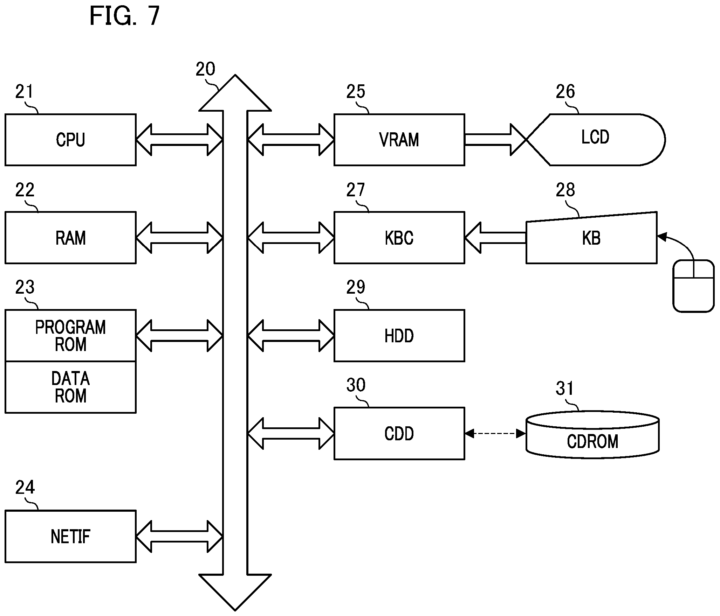

Next, a specific hardware configuration of each control unit in FIG. 4 will be described. FIG. 7 is a block diagram showing an example of a specific hardware configuration of the control unit 10-2, the control unit 11-2, the control unit 12-2, the control unit 13-2, the control unit 14-3, and the control unit 15-2.

In FIG. 7, reference sign 21 denotes a CPU serving as a computer that controls a calculation process and a control process of the information processing device. Reference sign 22 denotes a RAM, which functions as a main memory of the CPU 21, an execution program area, an execution area of the program, and a data area. Reference sign 23 denotes a ROM, which stores an operation processing procedure of the CPU 21.

The ROM 23 includes a program ROM in which the basic software (operating system (OS)) is recorded as a system program that controls the equipment of the information processing device and a data ROM in which information necessary for operating the system and the like are recorded. Furthermore, instead of the ROM 23, the HDD 29 to be described below may be used.

Reference sign 24 denotes a network interface (NETIF), which performs a control process and a connection state diagnosis process for performing data transmission to and from the information processing device via the Internet 16. Reference sign 25 denotes a video RAM (VRAM), which expands an image to be displayed on the screen of a liquid crystal display (LCD) 26 and controls the display. Reference sign 26 denotes a display device such as a display (hereinafter referred to as an LCD).

Reference sign 27 denotes a controller (hereinafter referred to as a KBC) for controlling an input signal from an external input device 28. Reference sign 28 denotes an external input device (hereinafter referred to as a KB) for receiving a manipulation performed by the user, and, for example, a pointing device such as a keyboard or mouse is used. Reference sign 29 denotes a hard disk drive (hereinafter referred to as an HDD), which is used for saving application programs and various types of data. The application program in the present embodiment is a software program or the like that executes various types of processing functions in the present embodiment.

Reference sign 30 denotes an external input/output device (hereinafter referred to as a CDD), which inputs and outputs data to and from removable media 31 serving as a removable data recording medium such as, for example, a CD-ROM drive, a DVD drive, or a Blu-ray (registered trademark) disc drive. The CDD 30 is used when the above-described application program is read from removable media. Reference sign 31 denotes removable media read by the CDD 30, such as, for example, a CD-ROM disc, DVD, or Blu-Ray disc.

The removable media may be a magneto-optical recording medium (for example, MO), a semiconductor recording medium (for example, a memory card), and the like. It is also possible to store and use application programs and data stored in the HDD 29 on the removable media 31. Reference sign 20 denotes a transmission bus (an address bus, a data bus, an input/output bus, or a control bus) for connecting the above-described units.

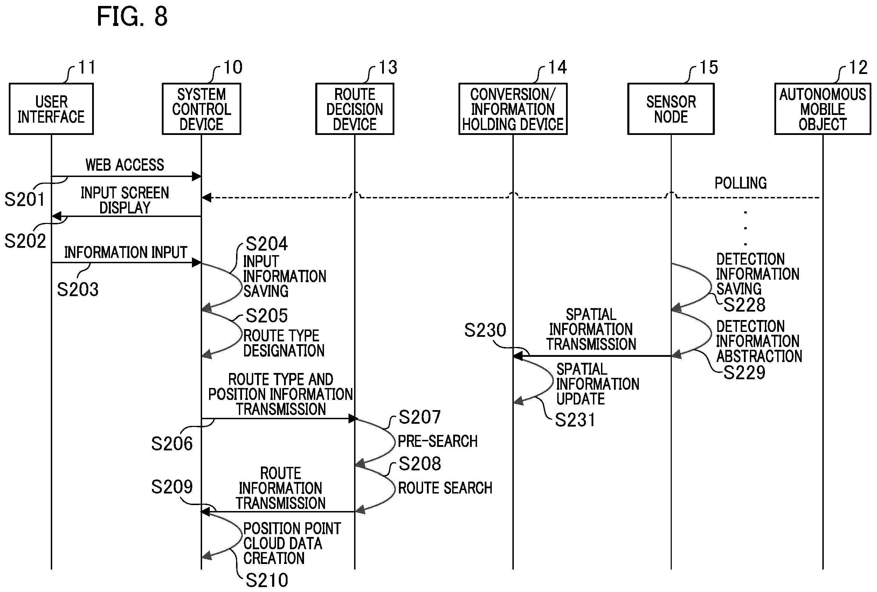

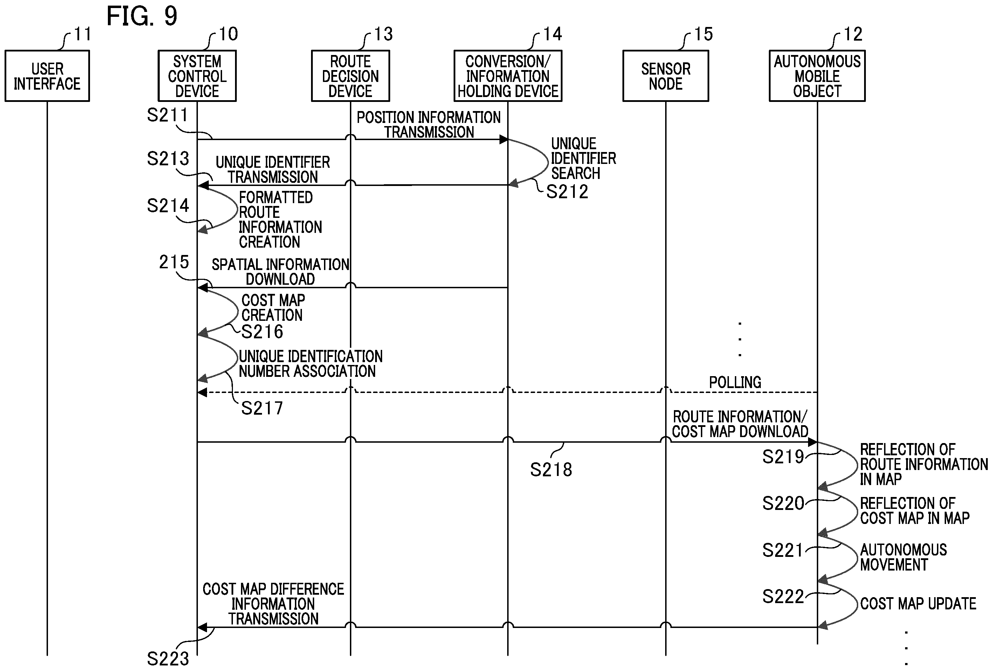

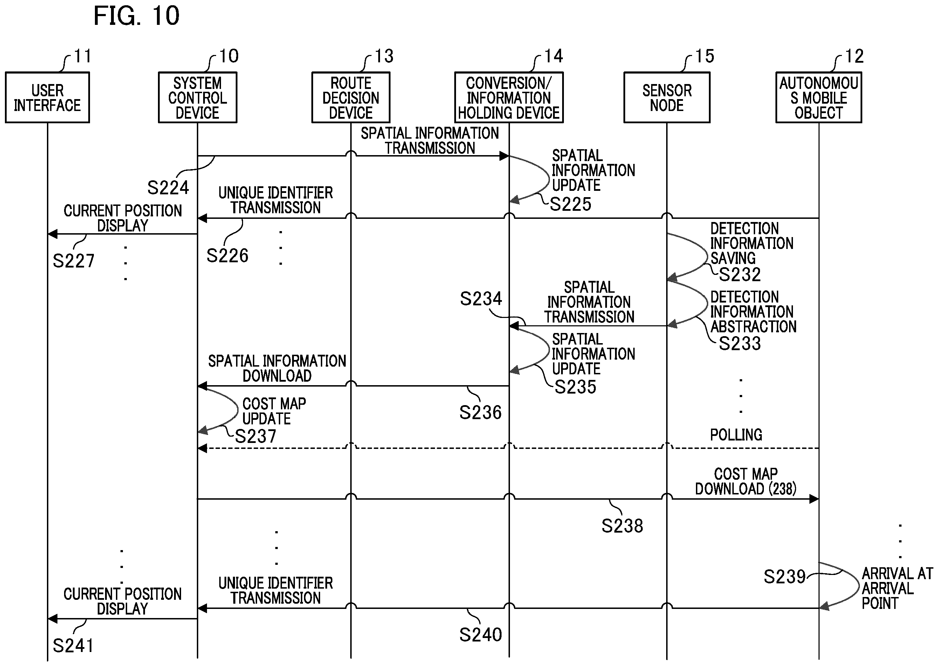

Next, details of a control operation in the autonomous mobile object control system for implementing the route setting application and the like as described in FIGS. 2 and 3 will be described with reference to FIGS. 8 to 10. FIG. 8 is a sequence diagram showing a process executed by the autonomous mobile object control system according to the embodiment, FIG. 9 is a sequence diagram following FIG. 8, and FIG. 10 is a sequence diagram following FIG. 9.

FIGS. 8 to 10 show a process executed by each device from the time when the user inputs the position information to the user interface 11 to the time when the current position information of the autonomous mobile object 12 is received. Furthermore, the operation of each step of the sequence of FIGS. 8 to 10 is performed when the computer in the control unit within each device executes a computer program stored in the memory.

First, in step S201, the user accesses a webpage provided by the system control device 10 with the user interface 11. In step S202, the system control device 10 displays a position input screen as described in FIG. 2 on a webpage display screen. In step S203, as described in FIG. 2, the user selects an autonomous mobile object (mobility) and inputs position information indicating the departure/stopover/arrival point (hereinafter referred to as position information).

The position information may be a word (hereinafter referred to as a position-specific word) for designating a specific location such as, for example, a building name, a station name, or an address, or may be a method of designating a specific position on a map displayed on the webpage as a point.

In step S204, the system control device 10 saves type information of the selected autonomous mobile object 12 and input position information. At this time, the position-specific word is saved when the position information is the position-specific word and the latitude/longitude corresponding to the point is searched for on the basis of the simple map information saved in the position/route information management unit 10-3 and the latitude/longitude is saved when the position information is the point.

Next, in step S205, the system control device 10 designates a type of route along which movement can be performed from a mobility type (type) of the autonomous mobile object 12 designated by the user (hereinafter referred to as a route type). Also, in step S206, the designated type of route is transmitted to the route decision device 13 together with the position information.

The mobility type is a legally distinguished type of mobile object and is a type such as a car, a bicycle, or a drone. Also, the type of route is, for example, a general road, a highway, a car road, or the like in the case of a car, a predetermined sidewalk, a roadside strip of a general road, a bicycle lane, or the like in the case of a bicycle, or the like.

In step S207, the route decision device 13 inputs the position information that has been received as a departure/stopover/arrival point to the possessed map information. When the position information is the position-specific word, a search is performed in map information according to the position-specific word and the corresponding latitude/longitude information is used. When the position information is the latitude/longitude information, the latitude/longitude information is input to the map information as it is.

Subsequently, in step S208, the route decision device 13 searches for a route from the departure point to the arrival point via the stopover point. At this time, a route according to the type of route is searched for as a search route. Also, in step S209, the route decision device 13 outputs the route (hereinafter referred to as route information) from the departure point to the arrival point via the stopover point as the search result in a GPS exchange format (GPX) and transmits the route information to the system control device 10.

Files in the GPX format mainly include three types: a waypoint (point information that does not have an order relationship), a route (point information that has an order relationship in which time information is added), and a track (a collection of a plurality of point information items: trajectory).

Latitude/longitude is referred to as an attribute value of the point information and an elevation, a geoid height, a GPS reception state, accuracy, and the like are referred to as child elements. A minimum element required for a GPX file is latitude/longitude information of a single point and the description of the other information is optional. The route is output as the route information and is a collection of point information consisting of latitude/longitude having an order relationship. Furthermore, the route information may have another format as long as the above is satisfied.

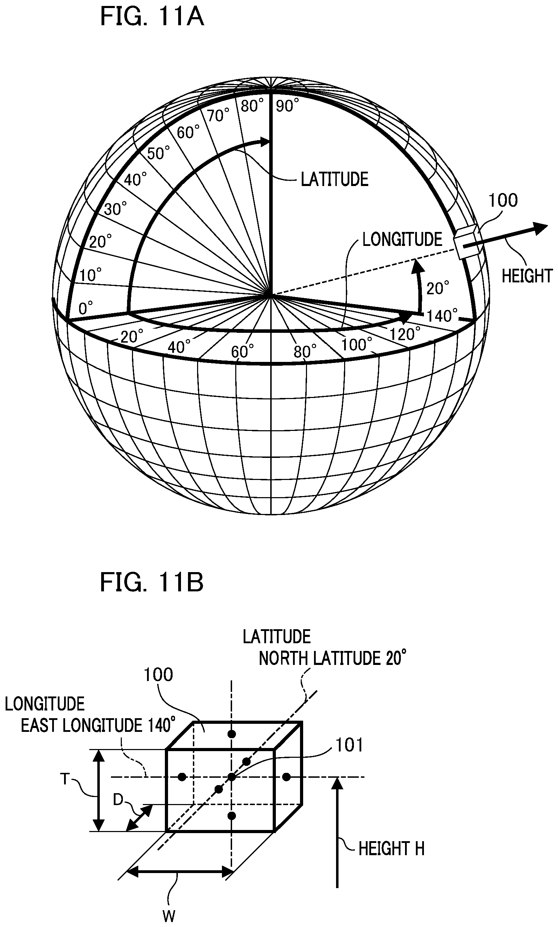

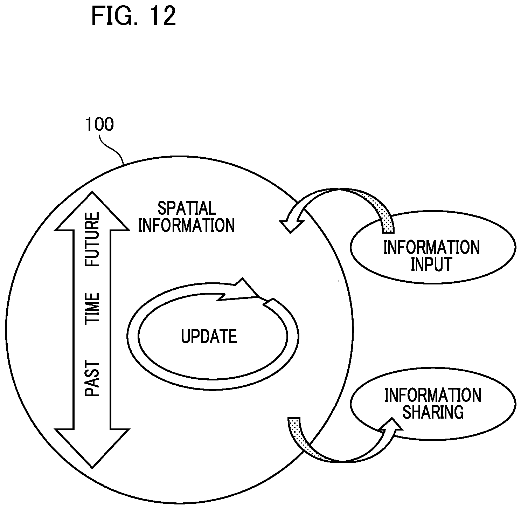

Here, an example of the configuration of the format managed in the format database 14-4 of the conversion/information holding device 14 will be described in detail with reference to FIGS. 11(A), 11(B), and 12. FIG. 11(A) is a diagram showing the Earth's latitude/longitude information and FIG. 11(B) is a perspective view showing a predetermined space 100 of FIG. 11(A). Also, the center of the predetermined space 100 in FIG. 11(B) is set as a center 101. FIG. 12 is a diagram schematically showing spatial information within the space 100.

In FIGS. 11(A) and 11(B), in the format, the Earth's space is divided into three-dimensional spaces decided according to a range starting from latitude/longitude/height, and a unique identifier is added to each space so that management is possible.

For example, here, the space 100 is displayed as a predetermined three-dimensional space. The space 100 is a division space in which 20 degrees north latitude, 140 degrees east longitude, and a height H at the center 101 are defined, a width in the latitude direction is denoted by D, a width in the longitude direction is denoted by W, and a width in the height direction is denoted by T. Also, the Earth's space is one space divided into spaces decided according to a range starting from the above-described latitude/longitude/height.

In FIG. 11(A), only the space 100 is displayed for convenience. However, in the definition of the format, as described above, spaces defined in the same way as the space 100 are arranged side by side in the latitude/longitude/height direction. Also, it is assumed that in arranged division spaces, a horizontal position is defined by latitude/longitude, an overlap is in the height direction, and a position in the height direction is defined by the height.

Although the center 101 of the division space is set as the starting point of the latitude/longitude/height in FIG. 11(B), the present invention is not limited thereto. For example, the center of a corner portion of the space or the center of a base surface may be used as the starting point. Also, a shape may be substantially a cuboid. Considering the case of laying on a spherical surface like the Earth, it is better to set the top surface slightly wider than the base surface of the cuboid so that an arrangement can be made without gaps.

In FIG. 12, in the example of the above-described space 100, in the format database 14-4, information about a type of physical object that can exist in or enter the range of the space 100 and a time limit (spatial information) is formatted and saved in association with a unique identifier. Also, the formatted spatial information is stored in chronological order from the past to the future.

That is, the conversion/information holding device 14, for example, formats spatial information about a type of physical object that can exist in or enter a three-dimensional space defined by a predetermined coordinate system such as latitude/longitude/height, for example, in association with a unique identifier and saves the formatted spatial information associated with the unique identifier in the format database 14-4. The spatial information is updated on the basis of information input by the external system (for example, the sensor node 15) or the like communicatively connected to the conversion/information holding device 14 and information is shared by other external systems communicatively connected to the conversion/information holding device 14.

As described above, in the present embodiment, information about a time limit and a type of physical object that can exist in or enter a three-dimensional space defined by latitude/longitude/height (hereinafter referred to as spatial information) is formatted and saved in association with a unique identifier in a database. Also, it is possible to perform spatio-temporal management according to the formatted spatial information.

The process executed by the autonomous mobile object control system will now be described again with reference back to FIG. 8. In step S210, the system control device 10 confirms a spacing between point information items within the received route information. Also, position point cloud data in which the spacing between the point information items is consistent with a spacing between the starting point positions of the division spaces defined in the format (hereinafter referred to as position point cloud data) is created.

In this case, when the spacing between the point information items is smaller than the spacing between the starting point positions of the division spaces, the system control device 10 designates a result of thinning out the point information within the route information according to the spacing between the starting point positions of the division spaces as position point cloud data. Also, when the spacing between the point information items is larger than the spacing between the starting point positions of the division spaces, the system control device 10 interpolates point information within a range that does not deviate from the route information to obtain position point cloud data.

Next, as shown in step S211 of FIG. 9, the system control device 10 transmits latitude/longitude information of each point information item of the position point cloud data to the conversion/information holding device 14 in the order of the route. Also, in step S212, the conversion/information holding device 14 searches for a unique identifier corresponding to the received latitude/longitude information from the format database 14-4 and transmits the unique identifier to the system control device 10 in step S213.

In step S214, the system control device 10 arranges the received unique identifier in the same order as the original position point cloud data and stores route information using the unique identifier (hereinafter referred to as formatted route information). Thus, in step S214, the system control device 10 acquires spatial information from the database of the conversion/information holding device 14 and generates route information about the movement route of the mobile object on the basis of the acquired spatial information and the type information of the mobile object.

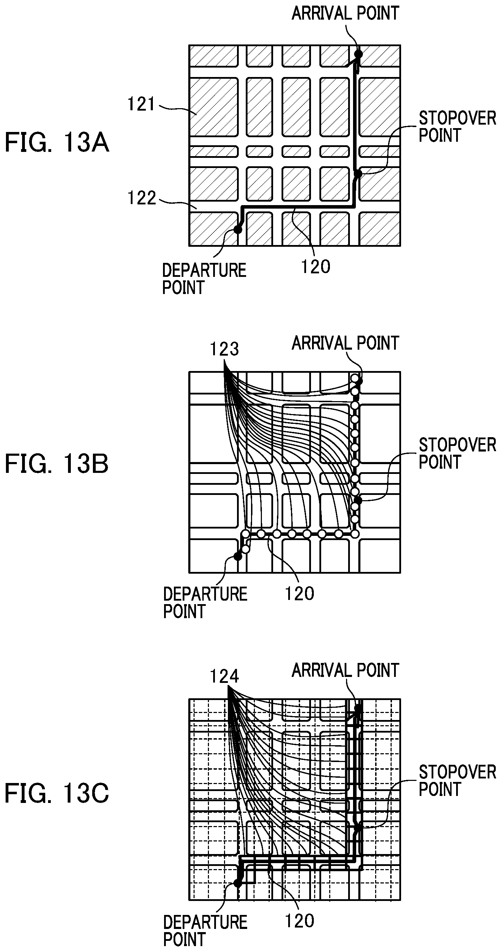

Here, a process of generating the position point cloud data from the route information and converting the position point cloud data into route information using the unique identifier will be described in detail with reference to FIGS. 13(A), 13(B), and 13(C). FIG. 13(A) is an image diagram in which route information is displayed in map information, FIG. 13(B) is an image diagram in which route information using position point cloud data is displayed in map information, and FIG. 13(C) is an image diagram in which route information using a unique identifier is displayed in map information.

In FIG. 13(A), reference sign 120 denotes route information, reference sign 121 denotes an immovable region through which the autonomous mobile object 12 cannot pass, and reference sign 122 denotes a movable region where the autonomous mobile object 12 can move. On the basis of the position information of the departure point, the stopover point, and the arrival point designated by the user, the route information 120 generated by the route decision device 13 is generated as a route along which the autonomous mobile object 12 passes through the departure point, the stopover point, and the arrival point and passes through the movable region 122 in the map information.

In FIG. 13(B), reference sign 123 denotes a plurality of position information items in the route information. The system control device 10, which has acquired the route information 120, generates the position information 123 arranged at predetermined intervals in the route information 120. The position information 123 can be represented by latitude/longitude/height and the position information 123 are referred to as position point cloud data in the present embodiment. Also, the system control device 10 transmits the latitude/longitude/height of each point of the position information 123 to the conversion/information holding device 14 one by one and converts it into a unique identifier.

In FIG. 13(C), reference sign 124 denotes positional spatial information obtained by converting the position information 123 into a unique identifier one by one, and expressing the spatial range defined by the unique identifier with a square frame. By converting the position information into a unique identifier, the positional spatial information 124 is obtained. Thereby, the route indicated in the route information 120 is expressed by performing conversion into continuous positional spatial information 124.

Furthermore, information about a time limit and a type of physical object that can exist in or enter a range of the above-described is associated with the positional spatial information 124. This continuous positional spatial information 124 is referred to as formatted route information in the present embodiment.

The process executed by the autonomous mobile object control system will now be described with reference back to FIG. 9. After step S214, in step S215, the system control device 10 downloads the spatial information associated with each unique identifier of the formatted route information from the conversion/information holding device 14.

Also, in step S216, the system control device 10 converts the spatial information into a format in which the spatial information can be reflected in the three-dimensional map of cyberspace of the autonomous mobile object 12, and creates information indicating positions of a plurality of physical objects (obstacles) within a predetermined space (hereinafter referred to as a cost map). The cost map may be created initially with respect to spaces of all routes of the formatted route information or may be created in a method in which a cost map is created in a separate form in a certain region and updated sequentially.

Subsequently, in step S217, the system control device 10 stores the formatted route information and the cost map in association with a unique identification number assigned to the autonomous mobile object 12.

The autonomous mobile object 12 performs a monitoring process (hereinafter, polling) for its unique identification number via the network at predetermined time intervals and downloads the associated cost map in step S218. In step S219, the autonomous mobile object 12 reflects the latitude/longitude information of each unique identifier of the formatted route information as route information with respect to a three-dimensional map of cyberspace created by itself.

Subsequently, in step S220, the autonomous mobile object 12 reflects the cost map as obstacle information on the route in the three-dimensional map of cyberspace. When the cost map is created in a separate form at regular intervals, the cost map of the next region is downloaded after moving the region in which the cost map has been created and the cost map is updated.

In step S221, the autonomous mobile object 12 moves along the route information while avoiding a physical object (obstacle) input in the cost map. That is, movement control is performed on the basis of the cost map. In this case, in step S222, the autonomous mobile object 12 moves while performing physical object detection and moves while updating the cost map using physical object detection information if there is a difference from the cost map.

Also, in step S223, the autonomous mobile object 12 transmits difference information about a difference from the cost map to the system control device 10 together with the corresponding unique identifier. The system control device 10, which has acquired the unique identifier and the difference information about a difference from the cost map, transmits spatial information to the conversion/information holding device 14 in step S224 of FIG. 10, and the conversion/information holding device 14 updates the spatial information of the corresponding unique identifier in step S225.

Content of the spatial information updated here does not reflect the difference information about a difference from the cost map as it is and is abstracted by the system control device 10 and then transmitted to the conversion/information holding device 14. Detailed content of the abstraction will be described below.

In step S226, the autonomous mobile object 12 moving on the basis of the formatted route information transmits a unique identifier associated with a space through which the autonomous mobile object 12 is currently passing to the system control device 10 every time the autonomous mobile object 12 passes through a division space associated with each unique identifier. Alternatively, at the time of polling, it may be associated with its unique identification number. The system control device 10 ascertains a current position of the autonomous mobile object 12 in the formatted route information on the basis of the unique identifier information of the space received from the autonomous mobile object 12.

The system control device 10 can ascertain where the autonomous mobile object 12 is currently located in the above-described formatted route information by iterating the above-described step S226. Furthermore, in relation to the unique identifier of the space through which the autonomous mobile object 12 has passed, the system control device 10 may stop a holding process, thereby reducing a held data capacity of the above-described formatted route information.

In step S227, the system control device 10 creates the confirmation screen 50 and the map display screen 60 described with reference to FIGS. 2 and 3 on the basis of the ascertained current position information of the autonomous mobile object 12 and displays the confirmation screen 50 and the map display screen 60 on the webpage display screen. Every time the unique identifier indicating the current position is transmitted to the system control device 10 by the autonomous mobile object 12, the system control device 10 updates the confirmation screen 50 and the map display screen 60.

On the other hand, in step S228, the sensor node 15 saves the detection information of the detection range, abstracts the detection information in step S229, and transmits the abstracted detection information to the conversion/information holding device 14 as the spatial information in step S230. The abstraction, for example, is related to information such as whether or not there is a physical object or whether or not there is a change in the existence state of the physical object and is not related to detailed information about the physical object.

Detailed information about the physical object is stored in the memory within the sensor node. Also, in step S231, the conversion/information holding device 14 stores the spatial information, which is abstracted detection information, in association with a unique identifier of a position corresponding to the spatial information. Thereby, the spatial information is stored in one unique identifier within the format database.

Also, when an external system different from the sensor node 15 utilizes the spatial information, the external system acquires and utilizes the detection information within the sensor node 15 via the conversion/information holding device 14 on the basis of the spatial information within the conversion/information holding device 14. At this time, the conversion/information holding device 14 also has a function of connecting a communication standard of the external system and the sensor node 15.

The conversion/information holding device 14 has a function of connecting data of a plurality of devices in a relatively small amount of data by storing the spatial information as described above between the devices in addition to the sensor node 15. Furthermore, in the case where the system control device 10 requires detailed physical object information when creating a cost map in steps S215 and S216, it is only necessary to download detailed information from an external system that stores detailed detection information of spatial information and use the downloaded information.

Here, it is assumed that the sensor node 15 updates the spatial information on the route of the formatted route information of the autonomous mobile object 12. In this case, the sensor node 15 acquires the detection information in step S232, generates the abstracted spatial information in step S233, and transmits the generated abstracted spatial information to the conversion/information holding device 14 in step S234. The conversion/information holding device 14 stores the spatial information in the format database 14-4 in step S235.

The system control device 10 confirms a change in the spatial information in the formatted route information to be managed at predetermined time intervals and downloads the spatial information in step S236 if there is a change. Also, the cost map associated with the unique identification number assigned to the autonomous mobile object 12 is updated in step S237. In step S238, the autonomous mobile object 12 recognizes the update of the cost map according to polling and reflects the recognized update in the three-dimensional map of cyberspace created by itself.

As described above, the autonomous mobile object 12 can recognize a change on a route incapable of being recognized by the autonomous mobile object 12 in advance and cope with the change by utilizing spatial information shared by a plurality of devices. When the above series of systems is executed and the autonomous mobile object 12 arrives at the arrival point in step S239, a unique identifier is transmitted in step S240.

Thereby, the system control device 10, which has recognized the unique identifier, displays an arrival indication on the user interface 11 and ends an application in step S241. According to the present embodiment, a digital architecture format and an autonomous mobile object control system using the same can be provided as described above.

As described in FIGS. 11(A), 11(B), and 12, the above-described format database 14-4 stores information about a type of physical object that can exist in or enter the range of the space 100 and a time limit (spatial information) in a time series from the past to the future. Also, the spatial information is updated on the basis of information input from an external sensor or the like communicatively connected to the conversion/information holding device 14, and information is shared by other external systems capable of being connected to the conversion/information holding device 14.

One of these spatial information items is type information of a physical object within a space. The type information of the physical object within the space here, for example, is information capable of being acquired from map information of a roadway in a road, a sidewalk, a bicycle road, and the like. Moreover, information such as a travel direction of a mobility on the roadway and traffic regulations can also be similarly defined as type information. Furthermore, as will be described below, the type information can be defined in the space itself.

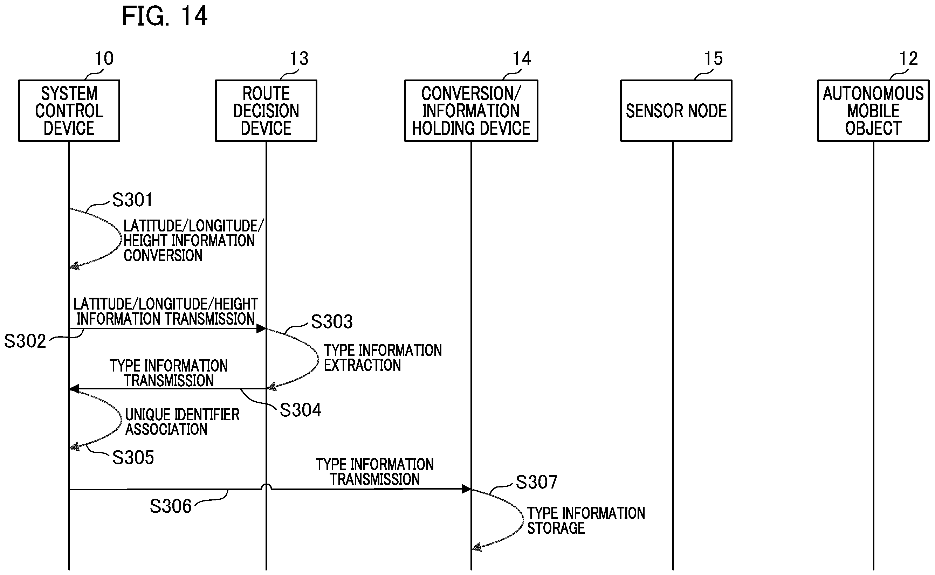

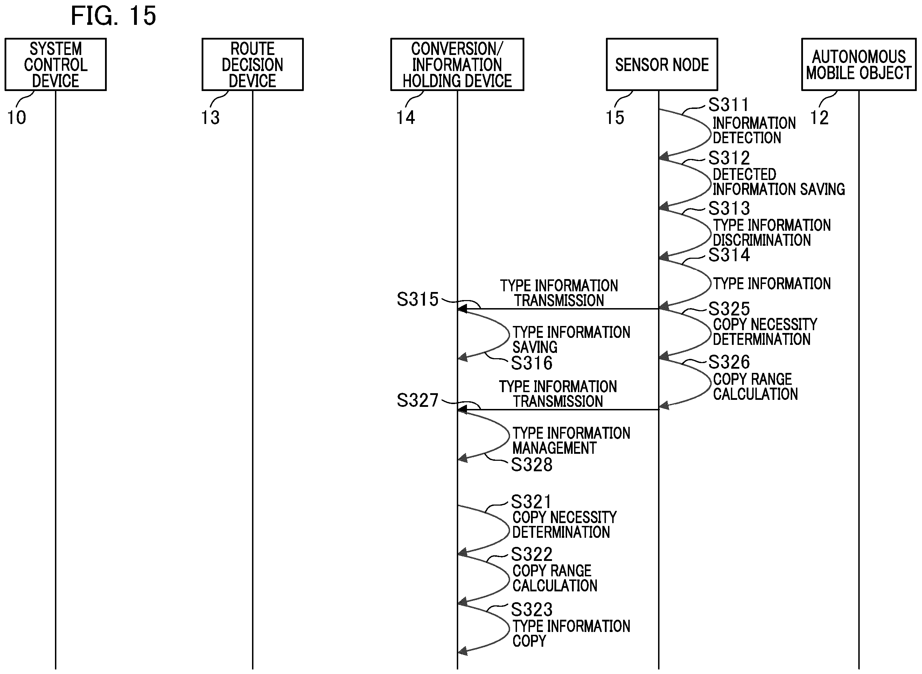

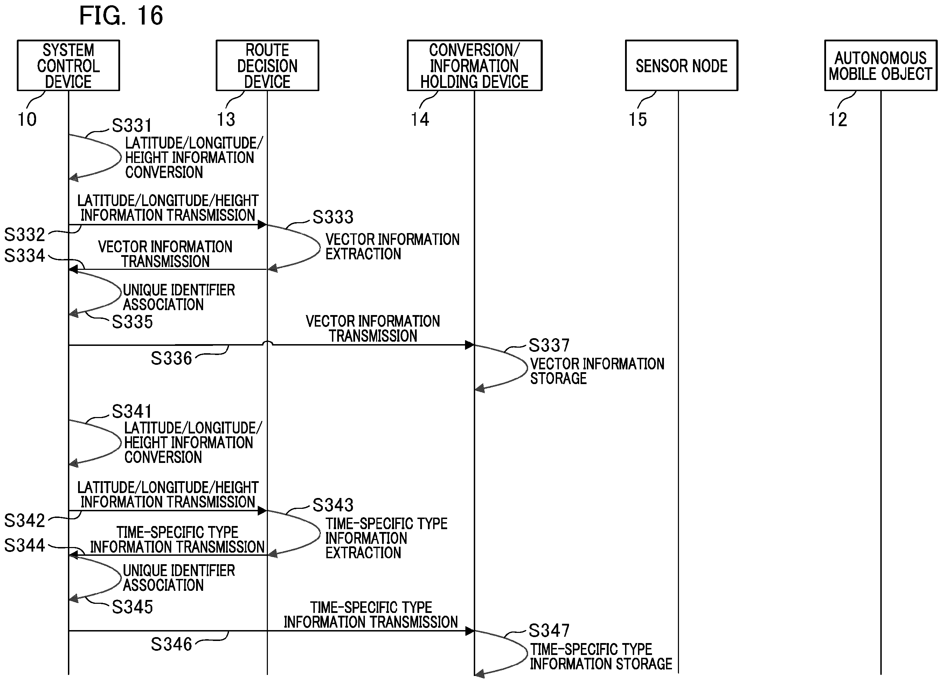

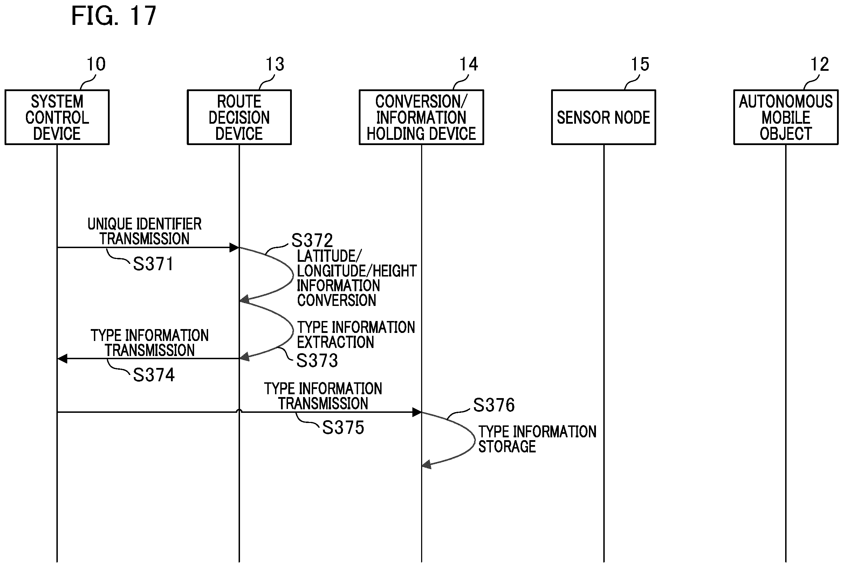

Hereinafter, details of the storage of type information in the format database 14-4 will be described using a flowchart. FIG. 14 is a sequence diagram showing a process in which each device stores type information in the format database 14-4, FIG. 15 is a sequence diagram following FIG. 14, and FIG. 16 is a sequence diagram following FIG. 15. Also, FIG. 17 is a sequence diagram showing a process of storing type information in a method different from FIG. 14.

Furthermore, the operation of each step of the sequence of FIGS. 14 to 16 and 17 is performed when the computer in the control unit within each device executes a computer program stored in the memory.

Hereinafter, a method of storing physical object type information from map information within a range managed by the unique identifier management unit 14-2 will be described. First, the system control device 10 initially converts a predetermined unique identifier into latitude/longitude/altitude information in step S301. Here, the predetermined unique identifier is not limited to a range indicated in the formatted route information and is a unique identifier within the range managed by the unique identifier management unit 14-2 of the conversion/information holding device 14.

Subsequently, in step S302, the system control device 10 transmits the position information such as latitude/longitude/altitude information to the route decision device 13. In step S303, the route decision device 13 extracts the type information of the physical object in the position information from the map information saved in the map information management unit 13-1 on the basis of the received position information. The type information of the physical object here is, for example, information capable of being acquired from map information of a roadway in a road, a sidewalk, a bicycle road, and the like.

Subsequently, in step S304, the route decision device 13 transmits the type information of the extracted physical object to the system control device 10. In step S305, the system control device 10 associates the transmitted type information of the physical object with the corresponding unique identifier of the latitude/longitude/altitude information and transmits the type information of the physical object associated with the unique identifier to the conversion/information holding device 14 in step S306. The conversion/information holding device 14 stores the transmitted type information of the physical object corresponding to the unique identifier in the format database 14-4 in step S307.

Here, the system control device 10 converts a unique identifier indicating a space starting from a predetermined position into latitude/longitude/altitude information and transmits the position information such as latitude/longitude/altitude information to the route decision device 13. Also, an example in which the route decision device 13 performs a process based on the received position information has been described. However, the present invention is not limited to this and other methods are also conceivable.

As another method, a method in which the system control device 10 transmits a unique identifier to the route decision device, and the route decision device 13 may perform a process on the basis of the position information indicated in the unique identifier on the basis of the received unique identifier is conceivable. That is, when spatial information is acquired from an information source in which spatial information is stored, a unique identifier may be used to designate the position of the space.

Hereinafter, a method of storing physical object type information from map information within the range managed by the unique identifier management unit 14-2 will be described with reference to FIG. 17.

First, the system control device 10 initially transmits a predetermined unique identifier to the route decision device 13 in step S371. The route decision device 13 converts the received unique identifier into latitude/longitude/altitude information in step S372. Subsequently, in step S373, the physical object type information in the position information based on the latitude/longitude/altitude information is extracted from the map information saved in the map information management unit 13-1.

Subsequently, in step S374, the route decision device 13 transmits the extracted physical object type information to the system control device 10. In step S375, the system control device 10 transmits the transmitted physical object type information to the conversion/information holding device 14. The conversion/information holding device 14 stores the physical object type information corresponding to the transmitted unique identifier in the format database 14-4 in step S376.

Although the case where the system control device 10 or the route decision device 13 performs an operation of converting a predetermined unique identifier into latitude/longitude/altitude information has been described here, the present invention is not limited thereto. For example, a device for converting a unique identifier into latitude/longitude/altitude information may be provided and this device may perform a conversion process for the unique identifier and latitude/longitude/altitude information.

In this way, in the range managed by the unique identifier management unit 14-2, the physical object type information corresponding to the unique identifier from the map information saved in the map information 13-1 can be stored in the format database 14-4.

Next, as another means for storing physical object type information, a method of storing physical object type information on the basis of information acquired by the sensor node will be described. As described in FIG. 4, for example, the sensor node 15 is an external system such as a video surveillance system like a roadside unit and the information storage unit (memory/HD) 15-3 stores position information about a position where the sensor node itself is installed.

The sensor node 15 detects information such as image information, feature point information, and position information of a physical object existing in or entering an area capable of being detected by the sensor node 15 using a physical object detection function and a distance measurement function of the detection unit 15-1 in step S311. Also, in step S312, the detected information is saved in the information storage unit (memory/HD) 15-3.

Also, the control unit 15-2 of the sensor node 15 discriminates the type information of the detected physical object on the basis of the image information and feature point information of the physical object in step S313 and stores the type information and the position information of the physical object in association with each other in the information storage unit (memory/HD) 15-3 in step S314.

In step S315, the sensor node 15 transmits the type information and the position information of the physical object in association with each other to the conversion/information holding device 14. In step S316, the conversion/information holding device 14 discriminates a unique identifier corresponding to the transmitted position information, and stores the type information of the physical object corresponding to the unique identifier in the format database 14-4. In this way, on the basis of the information detected by the sensor node 15, the type information of the physical object corresponding to the unique identifier can be stored in the format database 14-4.

Although a method based on map information and information acquired by the sensor node has been described as a means for storing the type information of the physical object, the present invention is not limited thereto. For example, as another means, image information acquired by an artificial satellite that monitors a ground situation and the like can be processed, and type information of a physical object in a predetermined space can be stored.

In the spatial information acquired from the map information, the sensor node, and the artificial satellite, the range in which spatial information can be acquired is different. When the spatial information is acquired from the map information, it is possible to cover the entire region of Japan as spatial information, for example, on the basis of the Geospatial Information Authority map issued by the Geospatial Information Authority of Japan. On the other hand, when spatial information is acquired on the basis of image information acquired by the artificial satellite and the like, spatial information within the range of image information acquired by the artificial satellite and the like can be acquired.

In other words, a spatial information acquisition range becomes all or part of Japan on the basis of an orbit of the artificial satellite. Also, when spatial information is acquired on the basis of the information acquired by the sensor node, spatial information of the detection area of the sensor node can be acquired.

When a video surveillance system such as, for example, a roadside unit, is used as a sensor node, a range in which spatial information can be acquired is about several tens to hundreds of meters in front of the roadside unit. In this way, it is conceivable that the spatial information acquisition range is wider in the order of map information > artificial satellite > sensor node.

Moreover, in the spatial information acquired from the map information, sensor node, and artificial satellite, a frequency at which spatial information can be updated is different. When the spatial information is acquired from the map information, because a frequency at which map information is updated is generally about several days to several years, a frequency at which spatial information can be updated is also equivalent thereto.

On the other hand, when spatial information is acquired on the basis of image information acquired by an artificial satellite, a frequency at which the information of a predetermined space is updated is decided on the basis of the orbit of the artificial satellite and the frequency at which the information of the predetermined space is updated is about a few hours to several days in general.

Also, when spatial information is acquired on the basis of the information acquired by the sensor node, the update frequency depends on a processing speed of the system if a video monitoring system such as, for example, a roadside unit, is used as the sensor node. In this case, the frequency at which the spatial information can be updated is generally about a few seconds. In this way, it is conceivable that a frequency at which spatial information can be updated is higher in the order of sensor node > artificial satellite > map information.

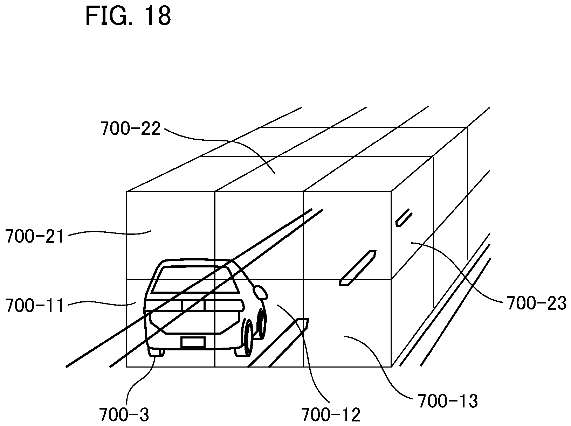

Furthermore, type information when a physical object does not exist in the space stationarily, i.e., when a physical object enters the space, will be described below. As described above with reference to FIGS. 11(A) and 11(B), in the format of the present embodiment, the Earth's space is divided into division spaces decided according to a range starting from latitude/longitude/height, and a unique identifier is added to each space so that management is possible. As a specific example of the three-dimensional space 100 as shown in FIG. 11(B), an example of a space on a roadway as shown in FIG. 18 will be described.

FIG. 18 is a perspective view showing an example of spaces on a roadway. The spaces are defined as, for example, spaces 700-11, 700-12, 700-13, 700-21, 700-22, and 700-23. Also, a car traveling on the roadway is a car 700-3. According to the control described in FIGS. 14 to 16, type information of the spaces 700-11, 700-12, and 700-13 in FIGS. 18 is defined as the roadway.

On the other hand, as shown in FIG. 18, the car 700-3 moves to the space 700-21 above the space 700-11 and the space 700-22 above the space 700-12 as well as the spaces 700-11 and 700-12 on the roadway. Thus, even if a physical object does not exist in the space stationarily, i.e., a physical object enters the space, it is desirable to define the type information of the space.

Next, a method of storing spatial type information will be described using the flowchart shown in FIG. 15. As described above, the format database 14-4 within the conversion/information holding device 14 stores type information of a physical object corresponding to a unique identifier. In step S321, the control unit 14-3 determines whether or not it is necessary to copy the type information to a unique identifier corresponding to a space adjacent in an upward direction on the basis of the type information of the physical object in the predetermined unique identifier within the stored format database 14-4.

Also, when it is determined that it is necessary to copy the type information to the unique identifier, a range of the unique identifier of the copy destination is calculated in step S322. Thereafter, in step S323, the control unit 14-3 copies the type information of the physical object in the predetermined unique identifier to the type information of the format database 14-4 in the unique identifier of the copy destination calculated in step S322.

As a specific example, as shown in FIG. 18, when the type information of the space 700-11 indicated in one unique identifier within the format database 14-4 is defined as a roadway, the type information of the space 700-11 is copied to the type information of the space 700-21 adjacent in the upward direction. At this time, the range of the copy destination of the type information is about 5 meters upward in consideration of, for example, a maximum height (4.3 meters) of a freight vehicle when the type information is a roadway. For example, when the size of one space is 0.5 meters cubic, the type information is copied to a space for nine upper spaces.

Moreover, as another method, the type information of the space may be stored on the basis of the information acquired by the sensor node. As described in the above-described steps S311 to S314, the type information and the position information of the physical object are associated and stored in the information storage unit (memory/HD) 15-3 on the basis of the information acquired by the sensor node. Furthermore, in step S325, it is determined whether or not it is necessary to copy the type information of the physical object for the space surrounding the physical object. If necessary, a range of position information of a copy destination is calculated in step S326.

Subsequently, in step S327, the sensor node 15 transmits the associated type information and position information of the physical object to the conversion/information holding device 14. The conversion/information holding device 14 determines a unique identifier corresponding to the transmitted position information and stores the type information of the physical object corresponding to the unique identifier in the format database 14-4 in step S328.

Although the operation of copying the type information to an upper space has been described here, the present invention is not limited thereto. A case where the type information is copied to a left, right, or lower space is also conceivable. Thus, in the present embodiment, spatial information between spaces adjacent to each other is standardized on the basis of the spatial information. Also, a setting process is performed by associating information about a type of physical object that can exist in or enter a three-dimensional space defined by latitude/longitude/height, and therefore it is possible to prevent another type of flying object such as a drone from entering a space of a roadway where a car or the like exists or enters.

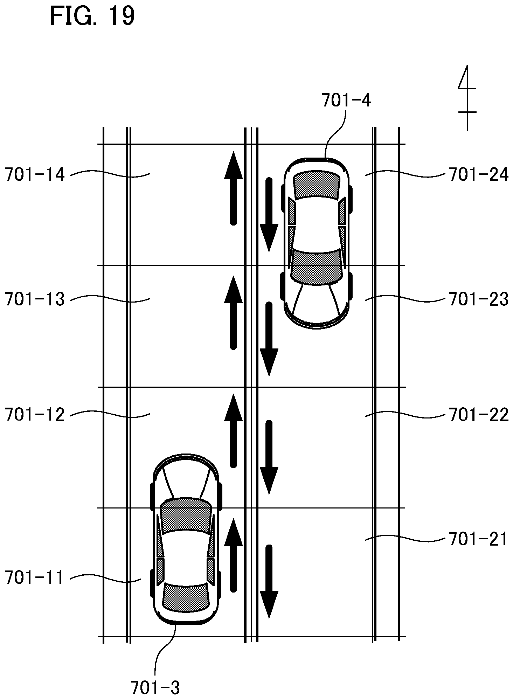

Furthermore, a movable direction of a physical object that can move within a space may be limited in the space. FIG. 19 is a view showing an example of a roadway of one lane on each side and its space from above. In FIG. 19, a space only on the roadway is shown for convenience. As shown in FIG. 19, for example, cars 701-3 and 701-4 can travel in north and south directions, respectively, on a roadway of one lane on each side where they can travel in the north and south directions.

Here, movable directions are defined as the north direction in which spaces 701-11, 701-12, 701-13, and 701-14 are indicated by arrows in FIG. 19 and the south direction in which spaces 701-21, 702-22, 702-23, and 702-24 are indicated by arrows in FIG. 19. Thus, information of a movable direction within the space (movement direction limit information) is present as one item of the type information within the space and the information of the movable direction within this space is defined as vector information.

A flow for setting vector information will be described with reference to FIG. 16.

First, in step S331, the system control device 10 initially converts a predetermined unique identifier into latitude/longitude/altitude information. Subsequently, in step S332, the system control device 10 transmits position information such as latitude/longitude/altitude information to the route decision device 13. In step S333, the route decision device 13 extracts vector information in the position information from the map information stored in the map information management unit 13-1 on the basis of the position information that has been received.

Spatial vector information here indicates, for example, a travel direction of a roadway in the road or the like, and is defined in a method in which, for example, 90° is east, 180° is south, and 270° is west when north is used as a reference. Furthermore, vector information in a vertical direction can also be included. Subsequently, in step S334, the route decision device 13 transmits the extracted spatial vector information to the system control device 10.

In step S335, the system control device 10 associates the transmitted spatial vector information with the corresponding unique identifier of the latitude/longitude/altitude information and transmits an association result to the conversion/information holding device 14 in step S336. In step S337, the conversion/information holding device 14 stores the spatial vector information corresponding to the transmitted unique identifier in the format database 14-4. In this way, the spatial vector information corresponding to the unique identifier from the map information can be stored in the format database 14-4.

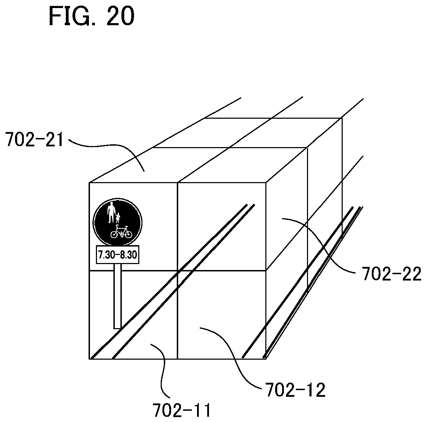

Furthermore, the type information of the physical object within the space may be time-variant. FIG. 20 is a perspective view showing an example of a space 702 on a road. As shown in FIG. 20, a time-period-specific traffic restriction is provided on the road, vehicles are prohibited from entering the road from 7:30 to 8:30, and the road becomes a walkway during this time period. Here, the type information changes in the spaces 702-11 and 702-12 shown in FIG. 20 according to a time period.

In addition to a case where the type information is time-variant, there are a case where a restriction on a movable direction is time-variant or a case where entry is simply prohibited in accordance with time. That is, information about a time limit may be attached to the space.

Thus, an example of a flow for setting information about a time limit in a space will be described with reference to FIG. 16. First, in step S341, the system control device 10 initially converts a predetermined unique identifier into latitude/longitude/altitude information. Subsequently, in step S342, the system control device 10 transmits the position information such as latitude/longitude/altitude information to the route decision device 13.

In step S343, the route decision device 13 extracts type information of a physical object corresponding to time in the position information from the map information saved in the map information management unit 13-1 on the basis of the position information that has been received.

The type information of the physical object corresponding to this time is referred to as time-specific type information. The time-specific type information here is information that can be acquired from map information such as, for example, a roadway or a sidewalk, on a road that is time-variant. Subsequently, in step S344, the route decision device 13 transmits the extracted time-specific type information to the system control device 10.

The system control device 10 associates the transmitted time-specific type information with the corresponding unique identifier of the latitude/longitude/altitude information in step S345 and transmits an association result to the conversion/information holding device 14 in step S346. The conversion/information holding device 14 stores the time-specific type information corresponding to the transmitted unique identifier in the format database 14-4 in step S347.

As described above, in the present embodiment, the spatial information includes at least one item of information about a movement direction limit or a time limit in the space. Although the storage of type information of a physical object and a space in a predetermined unique identifier and the like within the format database 14-4 has been described above, this information needs to be updated at an appropriate timing.

For example, in operations such as steps S311 to S316, the type information of the physical object is updated when there is a change in the existence state of the physical object detected by the sensor node 15. Also, in an operation for storing the type information of the physical object based on the map information like steps S301 to S307, when the map information managed by the map information management unit 13-1 is updated, it is desirable to update the type information in the updated space.

Also, in the processing of type information in the space as shown in FIGS. 11 and 12 and the operation for storing the movable direction in the space like steps S331 to S337, it is desirable to update the type information in the updated space when the map information has been updated. Furthermore, it is desirable to update the type information in the updated space when the map information has been updated in an operation for storing information about a time limit like steps S341 to S347.

Although an example of an update of type information in a space has been described above, the present invention is not limited thereto. As described above, in addition to map information, a plurality of means such as a sensor node and an artificial satellite can be considered as an information source of spatial information. Because it is conceivable that a frequency at which spatial information can be updated is higher in the order of sensor node > artificial satellite > map information, it is also conceivable that the information source of spatial information is decided in accordance with a desired update frequency in a given space. That is, the information source for acquiring the spatial information may be decided according to the information update frequency in the information source.

For example, it is also conceivable that type information in a space of an intersection with a lot of traffic is acquired from a sensor node in which a frequency at which spatial information can be updated is higher and type information in a space where there is little change in spatial information in an area with many buildings is acquired from the artificial satellite or the map information. That is, an information source for acquiring spatial information may be decided on the basis of a position of a three-dimensional space defined by latitude/longitude/height.

Also, in view of the update of type information in the space, it is conceivable that the information source of the spatial information is decided in accordance with a range in which spatial information can be acquired. For example, it is conceivable that type information in the vicinity of the intersection where the sensor node is arranged is acquired from the sensor node and type information in other areas is acquired from the artificial satellite or the map information. That is, spatial information may be acquired from two or more information sources.

Also, it is not necessary to limit the information source of the spatial information in a predetermined space. For example, the update of the type information in the predetermined space may be performed monthly on the basis of the map information and may be performed every few hours on the basis of information acquired by the artificial satellite. In this way, it is possible to appropriately update the type information in the space by appropriately deciding the information source of the spatial information in accordance with a frequency at which the spatial information can be updated or a range in which the spatial information can be acquired.

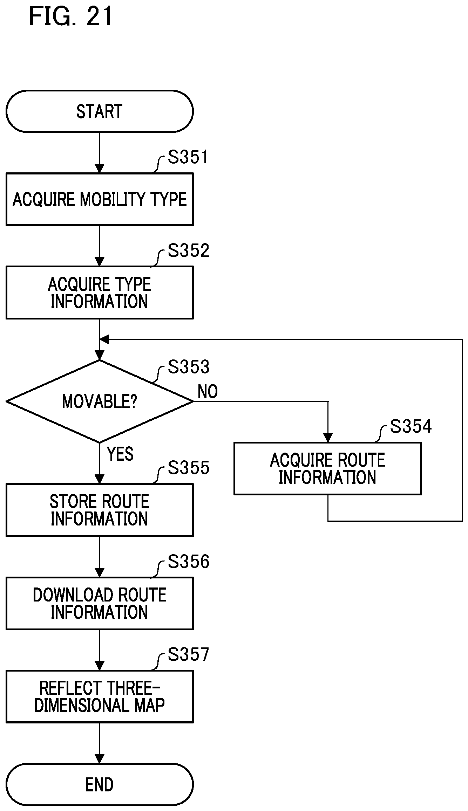

Furthermore, formatted route information indicating the movement route of the autonomous mobile object in the autonomous mobile object control system is created as described in steps S211 to S214. Here, a sequence for confirming whether the autonomous mobile object can be operated from type information of each unique identifier in the generated formatted route information and a mobility type (type information) of the autonomous mobile object 12 will be described with reference to FIG. 21.

FIG. 21 is a sequence diagram showing an example of a process of determining whether or not movement is possible from the type information and the mobility type. Furthermore, the operation of each step of the flowchart of FIG. 21 is performed when the computer in the control unit within the system control device 10 executes a computer program stored in the memory.

First, in step S351, the system control device 10 initially acquires a mobility type (type information) of the autonomous mobile object 12 from the information storage unit 12-4. Subsequently, in step S352, the system control device 10 acquires various types of information of each unique identifier of the created formatted route information from the format database 14-4 of the conversion/information holding device 14.

Subsequently, in step S353, the system control device 10 determines whether or not the autonomous mobile object 12 can move in each space indicated by each unique identifier according to the mobility type (type information) of the autonomous mobile object 12 and various types of information of each unique identifier.

For example, when the autonomous mobile object 12 is a car, it is determined that movement is possible if the type information of the unique identifier is a roadway and it is determined that movement is impossible if the type information of the unique identifier is a sidewalk. Also, for example, it may be determined whether or not the vector information of the unique identifier matches the movement direction of the autonomous mobile object 12 in each space indicated in the formatted route information or the like. It may be determined whether or not the movement direction of the autonomous mobile object 12 matches travel direction regulation information on a one-way road or the like.

When it is determined that movement is impossible in step S353, the route information is acquired again in step S354. That is, the route is set again as described in steps S203 to S209. Subsequently, the process returns to step S353. On the basis of the generated formatted route information, it is determined again whether or not the autonomous mobile object 12 can move in each space indicated by each unique identifier.

When it is determined that all unique identifiers indicate that movement is possible in step S353, the system control device 10 stores the formatted route information in association with a unique identification number assigned to the autonomous mobile object 12 in step S355.

The autonomous mobile object 12 performs a monitoring process (hereinafter, polling) for its unique identification number via the network at predetermined time intervals and downloads associated data in step S356. The autonomous mobile object 12 further reflects route information in a three-dimensional map of cyberspace created by itself on the basis of latitude/longitude information of each unique identifier of the formatted route information in step S357. That is, the mobile object generates a three-dimensional map on the basis of spatial information.

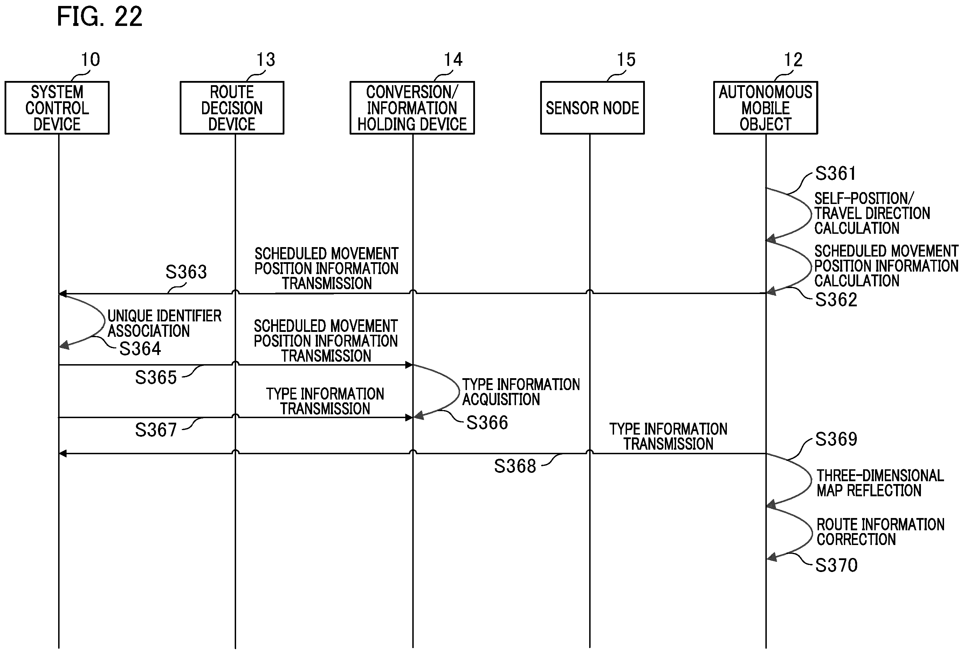

Next, a method in which the autonomous mobile object 12 reflects the type information of the space on the three-dimensional map will be described below with reference to FIG. 22. FIG. 22 is a sequence diagram showing a process of acquiring type information. Furthermore, the operation of each step of the sequence of FIG. 22 is performed when the computer in the control unit within each device executes a computer program stored in the memory.

Initially, in step S361, the control unit 12-2 of the autonomous mobile object 12 calculates a current self-position and a travel direction using a self-position detection function of a GPS or the like and a direction detection function of a geomagnetic sensor or the like mounted in the detection unit 12-1. Subsequently, in step S362, position information of a scheduled movement destination is calculated according to a calculated self-position and travel direction. This is referred to as scheduled movement position information.

In step S363, the autonomous mobile object 12 transmits the scheduled movement position information to the system control device 10 at predetermined intervals. The system control device 10 associates the transmitted scheduled movement position information with the corresponding unique identifier of the latitude/longitude/altitude information in step S364 and transmits an association result to the conversion/information holding device 14 in step S365.

In step S366, the conversion/information holding device 14 acquires type information of a physical object (type information of a physical object existing in or entering a space) corresponding to the transmitted unique identifier from the format database 14-4. Also, in step S367, the type information of the physical object is transmitted to the system control device 10. Also, in step S368, the system control device transmits the type information of the physical object that has been received to the autonomous mobile object 12.

The autonomous mobile object 12 reflects the type information of the physical object corresponding to the scheduled movement position information in its three-dimensional map of cyberspace in step S369 and corrects the route information in accordance with the type information of the physical object in step S370.

Furthermore, in the above-described embodiment, an example in which a control system is applied to an autonomous mobile object has been described. However, the mobile object of the present embodiment is not limited to an autonomous mobile object such as an automated guided vehicle (AGV) or an autonomous mobile robot (AMR).

For example, the mobile object of the present embodiment may be any moving device such as a car, train, ship, airplane, robot, or drone. Also, the control system of the present embodiment may or may not be partially mounted in the mobile object. Also, the present embodiment can also be applied to a case where a mobile object is remotely controlled. The present invention includes a combination of the above-described plurality of embodiments.

Although the present invention has been described above in detail on the basis of preferred embodiment, the present invention is not limited to the above-described embodiments and various modifications can be made on the basis of the spirit of the present invention, and they are not excluded from the scope of the present invention.

Furthermore, a computer program for implementing functions of the present embodiment in some or all control processes in the present embodiment may be configured to be supplied to a control system or the like via a network or various types of storage media. Also, a computer (or a CPU, a microprocessor unit (MPU), or the like) in the control system or the like may be configured to read and execute a program. In this case, the program and the storage medium storing the program constitute the present invention.

### (Cross-reference to related application)

This application claims the benefit of prior-filed Japanese Patent Application No. 2022-014166 filed on February 1, 2022, Japanese Patent Application No. 2022-085595 filed on May 25, 2022, and Japanese Patent Application No. 2022-205116 filed on December 22, 2022. Moreover, the content of the above Japanese patent applications is incorporated herein by reference in their entirety.

## Claims

1. A control system comprising:
a formatting means configured to format spatial information about a type of physical object capable of existing in or entering a three-dimensional space in association with a unique identifier; and
a control means configured to generate route information about a movement route of a mobile object on the basis of the spatial information acquired from the formatting means and type information of the mobile object.

2. A control system comprising:
an acquisition means configured to acquire spatial information about a type of physical object capable of existing in or entering a three-dimensional space from a database obtained by formatting the spatial information in association with a unique identifier; and
a control means configured to generate route information about a movement route of a mobile object on the basis of the spatial information acquired by the acquisition means and type information of the mobile object.

3. The control system according to claim 1, wherein the spatial information includes at least one of items of information about a movement direction limit and a time limit in the space.

4. The control system according to claim 1, comprising a display means for displaying the route information.

5. The control system according to claim 1, comprising a user interface for inputting at least a departure point and an arrival point of the mobile object.

6. The control system according to claim 1, wherein the mobile object generates a three-dimensional map on the basis of the spatial information.

7. The control system according to claim 1, comprising an update means configured to update the spatial information on the basis of information from an external sensor in accordance with movement of the mobile object.

8. The control system according to claim 1, wherein the control means generates a cost map on the basis of the spatial information.

9. The control system according to claim 8, wherein the mobile object performs movement control on the basis of the cost map.

10. The control system according to claim 1, wherein the control means shares spatial information of spaces adjacent to each other on the basis of the spatial information.

11. The control system according to claim 1, wherein the unique identifier is used to designate a position of the space when the spatial information is acquired from an information source in which the spatial information is stored at the time of formatting of the spatial information in association with the unique identifier.

12. The control system according to claim 1, wherein the spatial information is acquired from two or more information sources.

13. The control system according to claim 1, wherein an information source from which the spatial information is acquired is decided according to an information update frequency in the information source.

14. The control system according to claim 1, wherein an information source from which the spatial information is acquired is decided on the basis of a position of the three-dimensional space.

15. A control method comprising:
a formatting step of formatting spatial information about a type of physical object capable of existing in or entering a three-dimensional space in association with a unique identifier; and
a control step of generating route information about a movement route of a mobile object on the basis of the spatial information acquired in the formatting step and type information of the mobile object.

16. A control method comprising:
an acquisition step of acquiring spatial information about a type of physical object capable of existing in or entering a three-dimensional space from a database in which the spatial information is formatted and saved in association with a unique identifier; and
a control step of generating route information about a movement route of a mobile object on the basis of the spatial information acquired in the acquisition step and type information of the mobile object.

17. A storage medium storing a computer program for executing steps of a control method, the control method comprising:
an acquisition step of acquiring spatial information about a type of physical object capable of existing in or entering a three-dimensional space from a database in which the spatial information is formatted and saved in association with a unique identifier; and
a control step of generating route information about a movement route of a mobile object on the basis of the spatial information acquired in the acquisition step and type information of the mobile object.
